# EUROPÄISCHE PATENTSCHRIFT

(11) **EP 3 115 253 B1**
(45) Veröffentlichungstag und Bekanntmachung des Hinweises auf die Patenterteilung: **09.09.2020**
(21) Anmeldenummer: 16177680.2
(22) Anmeldetag: 04.07.2016
(51) Int. Cl.: B60M 1/28

(54) **VERFAHREN UND VORRICHTUNG ZUR ERKENNUNG EINER OBERLEITUNG ODER STROMSCHIENE OBERHALB EINES FAHRWEGS**
METHOD AND DEVICE FOR DETECTING AN OVERHEAD LINE OR BUSBAR ABOVE A DRIVEWAY
PROCEDE ET DISPOSITIF DE RECONNAISSANCE D'UNE CATENAIRE OU RAIL CONDUCTEUR AU-DESSUS D'UNE VOIE

(30) Priorität: 07.07.2015 DE 102015212681
(43) Veröffentlichungstag der Anmeldung: 11.01.2017
(73) Patentinhaber: Robert Bosch GmbH, 70442 Stuttgart (DE)
(72) Erfinder: Feile, Florian, 71723 Grossbottwar (DE); Niemann, Holger, 71640 Ludwigsburg (DE)

(56) Entgegenhaltungen:
- EP-A1- 2 803 604
- WO-A1-2015/020579
- DE-A1- 2 440 085
- DE-A1- 19 850 118
- DE-B3-102013 217 160
- JP-A- H05 278 503
- JP-A- H08 178 624
- US-A1- 2010 121 509
- US-A1- 2015 041 739

## Beschreibung

Die Erfindung betrifft ein Verfahren zur Erkennung einer Oberleitung oder Stromschiene oberhalb eines Fahrwegs.

Bei sogenannten Zweikraft- oder Hybridschienenfahrzeugen kann das Fahrzeug entweder mit Hilfe eines Verbrennungsmotors oder durch einen Stromabnehmer bei vorhandener Oberleitung auch elektrisch fortbewegt werden. Der Stromabnehmer ist beweglich und kann je nach Vorhandensein der Oberleitung hochgefahren oder abgesenkt werden. Bei Nichtvorhandensein einer Oberleitung sollte der Stromabnehmer nicht ausgefahren werden, da er mit einer gewissen Federkraft an die Leitung gedrückt wird. Fehlt die Leitung, ist keine Gegenkraft vorhanden und der Stromabnehmer geht in seine maximal mögliche ausgefahrene Lage. Fährt das Schienenfahrzeug mit maximal ausgefahrenem Stromabnehmer in einen Schienenbereich ein, der über eine Oberleitung verfügt, wird diese vom ausgefahrenen Stromabnehmer mit großer Wahrscheinlichkeit beschädigt oder abgerissen.

Bei derzeit im Einsatz befindlichen Schienenfahrzeugen erfolgt die Prüfung auf das Vorhandensein einer Oberleitung durch Sichtprüfung durch den Schienenfahrzeugführer.

Bei Bauarbeiten im Gleisbau stellt die Oberleitung stets eine Gefahrenquelle dar. Baumaschinen, die über ausfahrbare Teile, wie zum Beispiel Kranausleger verfügen, können die Oberleitung beschädigen. Bei bisher im Betrieb befindlichen Baumaschinen muss eine eventuelle vorhandene Oberleitung manuell erkannt werden und bei der Steuerung eines Auslegers berücksichtigt werden.

Aus der WO 2015/020579 A1 ist ein sensorgestütztes Verfahren zur Erkennung einer Oberleitung oberhalb eines Fahrzeugs bekannt. Aus der US 2015/0041739 A1 ist ein Baufahrzeug für Arbeiten an einer Oberleitung bekannt. Aus der DE 198 50 118 A1 ein sensorgestütztes Profilmesssystem zum Messen des Profils einer Oberleitung bekannt. Aus EP 2 803 604 A1 ist es bekannt eine aufwärtse Bewegung eines Auslegers zu verhindern als ein Objekt sich über die Ausleger befindet.

### Offenbarung der Erfindung

Das erfindungsgemäße Verfahren hat demgegenüber den Vorteil, dass eine Oberleitung oder Stromschiene oberhalb eines Fahrwegs erkannt wird, indem ein Bereich oberhalb des Fahrwegs mit einem an einem Fahrzeug befindlichen und nach oben gerichteten Sensor überwacht wird und ein Erkennungssignal erzeugt wird, wenn ausgehend von einem Sensorsignal erkannt wird, dass oberhalb des Fahrzeugs eine Oberleitung oder Stromschiene vorhanden ist. Unter dem Begriff Fahrweg ist im Folgenden insbesondere ein Gleis bzw. Schienenstrang zu verstehen, der zumindest auf elektrifizierten Streckenabschnitten im Regelfall von einer Oberleitung oder Stromschiene überspannt ist. Unter Fahrweg kann aber auch eine Straße verstanden werden, die beispielsweise zur Versorgung von Elektrobussen oder Lastkraftwagen mit elektrischem Antrieb ebenfalls mit einer Oberleitung überspannt sein kann.

Vorteilhaft ist, wenn das Erkennungssignal Informationen über eine Höhe der erkannten Oberleitung oder Stromschiene relativ zu einer Höhe des Fahrwegs enthält. Ein solches Erkennungssignal ist geeignet, eine maximal zulässige Ausfahrhöhe, beispielsweise eines Kranauslegers zu bestimmen.

Erfindungsgemäß wird basierend auf dem Erkennungssignal ein auf dem Fahrzeug befindliches, höhenverstellbares Element bewegt.

Nicht erfindungsgemäß ist, wenn es sich bei dem an dem Fahrzeug befindlichen höhenverstellbaren Element um ein Stromabnehmer handelt, der in Abhängigkeit von dem Erkennungssignal an die Oberleitung oder Stromschiene herangeführt wird.

Erfindungsgemäß handelt es sich bei dem an dem Fahrzeug befindlichen, höhenverstellbaren Element um einen Ausleger, dessen Bewegung nach oben in Abhängigkeit von dem Erkennungssignal derart begrenzt wird, dass ein vorgebbarer Höhenmindestabstand zwischen Ausleger und der Oberleitung oder der Stromschiene nicht unterschritten wird. In besonders vorteilhafter Ausgestaltung ist dieser Höhenmindestabstand abhängig von einer an der Oberleitung oder Stromschiene anliegenden Spannung. So ist es zum Beispiel möglich, pro tausend Volt Spannung einen Zentimeter Sicherheitsabstand einzuhalten. Bei zum Beispiel in Deutschland üblichen fünfzehntausend Volt Oberleitungsspannung kann der vorgebbare Höhenmindestabstand somit etwa 15 Zentimeter betragen.

Vorteilhaft ist, wenn die Bewegung des Auslegers nach oben nur dann begrenzt wird, wenn zusätzlich festgestellt wird, dass die erkannte Oberleitung oder Stromschiene unter Spannung steht. Eine solche Erkennung ist entweder mittels einer zusätzlichen Sensorik möglich, oder kann manuell vorgenommen werden. So ist beispielsweise beim Einsatz einer Baumaschine an einem Baustellenbereich üblicherweise im Vorfeld bekannt, ob eine vorhandene Oberleitung unter Spannung steht oder nicht.

Vorteilhaft ist, wenn es sich bei dem Sensorsignal, um das Signal eines Radarsensors handelt. Da Radarsensoren besonders unempfindlich gegen Schmutz beispielsweise eine Schneeablagerung auf dem nach oben genannten Sensor, sind. Ultraschallsensoren oder optische Sensoren, wie beispielsweise Kameras, sind hierfür weniger geeignet.

Vorteilhaft ist eine Vorrichtung zur Erkennung einer Oberleitung oder Stromschiene oberhalb eines Fahrwegs, wobei sich die Vorrichtung an einem Fahrzeug befindet, dass geeignet ist, den Fahrweg zu befahren und die Vorrichtung einen Sensor umfasst, der eingerichtet ist, einem Bereich oberhalb des Fahrzeugs auf das Vorhandensein einer Oberleitung oder Stromschiene zu überwachen.

Vorteilhaft ist eine Vorrichtung, bei der es sich bei dem Sensor um einen Radarsensor handelt.

Vorteilhaft ist außerdem ein Computerprogramm, dass dazu ausgebildet ist, oder durch Kompilieren dazu ausgebildet ist, jeden Schritt des erfindungsgemäßen Verfahrens durchzuführen.

Vorteilhaft ist außerdem ein elektronisches Speichermedium, auf dem das Computerprogramm gespeichert ist, sowie eine elektronische Steuereinheit, die das elektronische Speichermedium umfasst.

Nachfolgend werden Ausführungsbeispiele der vorliegenden Erfindung anhand der beiliegenden Zeichnung näher erläutert. Dabei zeigen:
Kurze Beschreibung der Zeichnungen
- Figur 1: eine schematische Darstellung eines Schienenfahrzeugs, dass die nicht erfindungsgemäße Vorrichtung umfasst;
- Figur 2: eine schematische Darstellung einer Baumaschine, die die erfindungsgemäße Vorrichtung umfasst.

### Ausführungsformen der Erfindung

Es sei angemerkt, dass die Erfindung sich nicht nur für den Einsatz bei schienengebundenen Fahrzeugen eignet. Ein Einsatz in Oberleitungsbussen bzw. Lastkraftwagen, die über eine elektrische Oberleitung mit Energie versorgt werden, ist ebenso möglich. Die Erfindung kann darüber hinaus auch bei Baumaschinen eingesetzt werden, die für den Einsatz auf oberleitungsüberspannten Straßen vorgesehen sind.

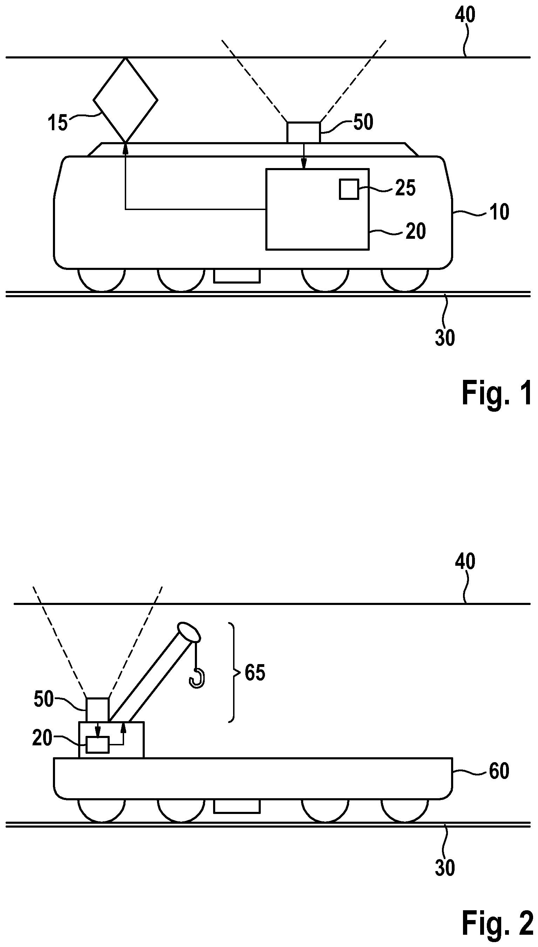

Figur 1 zeigt eine schematische Darstellung eines Schienenfahrzeugs mit der nicht erfindungsgemäßen Vorrichtung. Das Schienenfahrzeug (10), bei dem es sich beispielsweise um eine Lokomotive oder einen Triebwagen handeln kann, verfügt über eine elektronische Steuereinheit (20), die wiederum ein elektronisches Speichermedium (25) umfasst. Das Schienenfahrzeug (10) umfasst fer- ' ner einen Stromabnehmer (15), der mittels einer Stelleinrichtung an eine Oberleitung (40) herangefahren oder in Richtung des Daches des Schienenfahrzeugs (10) abgesenkt werden kann. Das Schienenfahrzeug (10) verfügt ferner über einen Radarsensor (50), dessen Sichtkegel nach oben gerichtet ist. Das Schienenfahrzeug (10) befährt ein Gleis (30), das sich im Regelfall aus zwei Schienen zusammensetzt. Die Oberkante der Schienen, die sogenannte Schienenoberkante, definiert dabei ein Referenzniveau in Bezug auf einen Abstand zur Oberleitung.

Im Folgenden wird davon ausgegangen, dass sich der Stromabnehmer (15) zu Beginn des nicht erfindungsgemäßen Verfahrens in eingefahrenem Zustand, das heißt maximal von der Oberleitung (40) entfernt, befindet. In einem ersten Schritt wird das erfindungsgemäße Verfahren gestartet, beispielweise in dem es durch einen Bediener des Schienenfahrzeugs (10), beispielsweise einen Lokführer, initialisiert wird.

Der Bediener des Schienenfahrzeugs (10) fordert über eine geeignete Schnittstelle ein Heranführen des Stromabnehmers (15) an eine vermutete Oberleitung an. Nachdem diese Anforderung durch die elektronische Steuereinheit (20) erkannt worden ist, wird mittels des Radarsensors (50) überprüft, ob sich oberhalb des Schienenfahrzeugs (10) eine Oberleitung (40) befindet. Da der Sichtkegel des Radarsensors (50) nach oben, also in Richtung der Oberleitung (40) gerichtet ist, zeigt sich das Vorhandensein einer Oberleitung im Bild des Radarsensors (50) als schmale, lange durchgezogene Linie, die sich durch den gesamten Sichtkegel des Radarsensors (50) hindurch zieht. Eine solche Linie ist mittels moderner Bildverarbeitungsalgorithmen leicht zu erkennen. Diese Bildverarbeitungsalgorithmen können entweder direkt in dem Radarsensor (50) oder in der elektronischen Steuereinheit (20) ablaufen. Wird erkannt, dass sich oberhalb des Schienenfahrzeugs (10) eine Oberleitung (40) befindet, erfolgt in einem nächsten Schritt die Freigabe für das Heranfahren des Stromabnehmers (15) an die Oberleitung (40). Der Stromabnehmer (15) wird also mittels einer Höhenverstelleinrichtung soweit nach oben ausgefahren, bis elektrisch leitender Kontakt zur Oberleitung (40) hergestellt ist. Wird das Vorhandensein der Oberleitung mittels des Radarsensors (50) nicht erkannt, wird der Heranführen des Stromabnehmers (15) an die Oberleitung (40) blockiert.

In einer alternativen Ausgestaltung wird das nicht erfindungsgemäße Verfahren nicht durch die Anforderung eines Bedieners des Schienenfahrzeugs (10) initialisiert, sondern durch einen Automatismus, der abhängig von der Position des Schienenfahrzeugs eine Oberleitung (40) vermutet und daraufhin ein Heranfahren des Stromabnehmers (15) an die Oberleitung (40) anfordert.

In einer weiteren alternativen Ausgestaltung wird das Heranfahren des Stromabnehmers (15) an die Oberleitung (40) nicht durch die elektronische Steuereinheit (20) vorgenommen. Stattdessen erhält der Bediener des Schienenfahrzeugs (10) mittels einer geeigneten Anzeigevorrichtung ein Signal, das bestätigt, das mittels des Radarsensors (50) das Vorhandensein einer Oberleitung (40) erkannt wurde. Der Bediener des Schienenfahrzeugs (10) fährt daraufhin den Stromabnehmer (15) manuell an die Oberleitung (40) heran.

Figur 2 zeigt eine schematische Darstellung einer Baumaschine (60), die eingerichtet ist, ein Gleis zu befahren und die über eine erfindungsgemäße Vorrichtung verfügt. Elemente, die im Rahmen der Beschreibung der Figur 1 beschrieben wurden, sind mit den gleichen Bezugszeichen versehen und werden im Folgenden nicht näher beschrieben. Die Baumaschine (60) verfügt über einen Kranausleger (65), auf dem ein Radarsensor (50) montiert ist. Der Sichtkegel des Radarsensors (50) ist nach oben in Richtung einer eventuell vorhandenen Oberleitung (40) gerichtet. Im Betrieb der Baumaschine (60) wird mittels des Radarsensors (50) permanent überprüft, ob sich oberhalb der Baumaschine (60) eine Oberleitung (40) befindet. Zusätzlich dazu wird mittels des Radarsensors (50) die Höhe der erkannten Oberleitung (40) oberhalb der Schienenoberkante des Gleises (30) bestimmt.

Die Bewegung des Kranauslegers (65) wird in Abhängigkeit der ermittelten Höhendifferenz zwischen Gleisoberkante und Oberleitung (40) derart begrenzt, dass ein vorgebbarer Höhenmindestabstand zwischen Oberleitung (40) und Schienenoberkante nicht unterschritten wird. Somit ist sichergestellt ist, dass sich der Kranausleger (65) nicht um mehr als einen resultierenden Sicherheitsabstand an die Oberleitung (40) annähert. Der Sicherheitsabstand ist dabei so bemessen, dass ein Überspringen eines Lichtbogens von der Oberleitung (40) auf den Kranausleger (65) sicher verhindert werden kann. In einer alternativen Ausgestaltung wird mittels einer weiteren Sensorik ermittelt, ob die Oberleitung (40) spannungsführend ist oder nicht. Wenn erkannt wird, dass die Oberleitung (40) nicht spannungsführend ist, wird die Bewegung des Auslegers nach oben nicht begrenzt.

## Patentansprüche

1. Verfahren zur Erkennung einer Oberleitung (40) oder Stromschiene oberhalb eines Fahrwegs, wobei ein Bereich oberhalb des Fahrwegs mit einem an einem Fahrzeug befindlichen und nach oben gerichteten Sensor überwacht wird und ein Erkennungssignal erzeugt wird, wenn ausgehend von einem Sensorsignal erkannt wird, dass oberhalb des Fahrzeugs eine Oberleitung (40) oder Stromschiene vorhanden ist, wobei basierend auf dem Erkennungssignal ein an dem Fahrzeug befindliches, höhenverstellbares, Element bewegt wird, **dadurch gekennzeichnet, dass** es sich bei dem an dem Fahrzeug befindlichen, höhenverstellbaren Element um einen Ausleger handelt, dessen Bewegung nach oben in Abhängigkeit von dem Erkennungssignal derart begrenzt wird, dass ein vorgebbarer Höhenmindestabstand zwischen Ausleger und der Oberleitung (40) oder der Stromschiene nicht unterschritten wird.

2. Verfahren nach Anspruch 1, **dadurch gekennzeichnet, dass** die Bewegung des Auslegers nach oben nur dann begrenzt wird, wenn zusätzlich festgestellt wird, dass die erkannte Oberleitung (40) oder Stromschiene unter Spannung steht.

3. Verfahren nach einem der vorangegangenen Ansprüche, **dadurch gekennzeichnet, dass** es sich bei dem Sensorsignal um das Signal eines Radarsensors (50) handelt.

4. Computerprogramm, dass dazu ausgebildet ist oder durch Kompilieren dazu ausgebildet wird, jeden Schritt des Verfahrens nach einem der vorangegangenen Ansprüche auszuführen.

5. Elektronisches Speichermedium (25), auf dem das Computerprogramm nach Anspruch 4 gespeichert ist.

6. Elektronische Steuereinheit (20), die das elektronische Speichermedium (25) nach Anspruch 5 umfasst.

## Claims

1. Method for detecting an overhead line (40) or conductor rail above a route, wherein an area above the route is monitored by means of an upwardly directed sensor located on a vehicle and a detection signal is generated if it is detected from a sensor signal that there is an overhead line (40) or conductor rail above the vehicle, wherein an adjustable-height element located on the vehicle is moved on the basis of the detection signal, **characterized in that** the adjustable-height element located on the vehicle is a boom, the upward movement of which is limited on the basis of the detection signal such that a prescribable minimum vertical distance between the boom and the overhead line (40) or the conductor rail is not infringed.

2. Method according to Claim 1, **characterized in that** the upward movement of the boom is limited only if it is additionally found that the detected overhead line (40) or conductor rail is live.

3. Method according to either of the preceding claims, **characterized in that** the sensor signal is the signal from a radar sensor (50).

4. Computer program designed, or developed by compiling, to carry out each step of the method according to one of the preceding claims.

5. Electronic storage medium (25) on which the computer program according to Claim 4 is stored.

6. Electronic control unit (20) comprising the electronic storage medium (25) according to Claim 5.

## Revendications

1. Procédé de reconnaissance d'une caténaire (40) ou d'un rail conducteur au-dessus d'une voie, dans lequel une zone au-dessus de la voie est surveillée par un capteur se trouvant sur le véhicule et étant orienté vers le haut, et un signal de reconnaissance est généré si en partant d'un signal de capteur il est reconnu qu'il existe une caténaire (40) ou un rail conducteur au-dessus du véhicule, dans lequel, sur la base du signal de reconnaissance, un élément réglable en hauteur et se trouvant sur le véhicule est déplacé, **caractérisé en ce que** l'élément réglable en hauteur et se trouvant sur le véhicule est une console dont le déplacement vers le haut est limité en fonction du signal de reconnaissance de sorte qu'une distance minimale en hauteur prédéfinissable entre la console et la caténaire (40) ou le rail conducteur ne soit pas soupassée.

2. Procédé selon la revendication 1, **caractérisé en ce que** le déplacement de la console vers le haut n'est limité que s'il est constaté en outre que la caténaire (40) ou le rail conducteur reconnu(e) est sous tension.

3. Procédé selon l'une quelconque des revendications précédentes, **caractérisé en ce que** le signal de capteur est le signal d'un capteur radar (50).

4. Programme informatique, qui est réalisé, ou réalisé par compilation, pour exécuter chaque étape du procédé selon l'une quelconque des revendications précédentes.

5. Support de stockage électronique (25) sur lequel est stocké le programme informatique selon la revendication 4.

6. Unité de commande électronique (20) comprenant le support de stockage électronique (25) selon la revendication 5.
